# EUROPÄISCHE PATENTSCHRIFT

(11) **EP 0 900 689 B1**
(45) Veröffentlichungstag und Bekanntmachung des Hinweises auf die Patenterteilung: **05.12.2001**
(21) Anmeldenummer: 98115871.0
(22) Anmeldetag: 22.08.1998
(51) Int. Cl.: B60N 2/42, B60N 2/44

(54) **Abstützung eines Fahrzeugsitzes, insbesondere einer längsverstellbaren hinteren Sitzbank**
Support for a vehicle seat, particularly a longitudinaly adjustable rear seat bench
Support pour un siège de véhicule, en particulier une banquette arrière réglable longitudinalement

(30) Priorität: 05.09.1997 DE 19739038
(43) Veröffentlichungstag der Anmeldung: 10.03.1999
(73) Patentinhaber: ADAM OPEL AG, 65423 Rüsselsheim (DE)
(72) Erfinder: Polster, Michael, Dipl.-Ing., 65201 Wiesbaden (DE); Eikemeier, Wolfram, Dipl.-Ing., 55546 Hackenheim (DE)
(74) Vertreter: Kümpfel, Heinz, Dipl.-Ing.

(56) Entgegenhaltungen:
- EP-A- 0 779 176
- WO-A-96/38318
- DE-U- 9 012 256
- US-A- 5 366 268

## Beschreibung

Die Erfindung betrifft eine Abstützung eines Fahrzeugsitzes gemäß dem Oberbegriff des Patentanspruches 1.

Eine solche Abstützung ist beispielsweise mit DE-U 90 12 256 beschrieben. Mit Abstützungen dieser Art kann ein Fahrzeugsitz und auch eine Sitzbank leicht verschiebbar auf den Sitzschienen gehalten werden. Insbesondere bei dem gegenüber Einzelsitzen größeren Gewicht von Sitzbänken besteht jedoch die Gefahr, daß bei einem Frontcrash des Fahrzeugs die Sitzbank nach oben verformt wird oder gar aus der Führung der Sitzschienen herausreißt. Bei einem Heckaufprall kann sich eine Sitzbank mit bekannter Abstützung zum Fahrzeugboden hin durchbiegen und bleibend deformieren.

Die Anordnung einer zusätzliche Sitzschiene in der Mitte einer Sitzbank erfordert erheblichen Aufwand, da sie genau parallel zu den seitlichen Sitzschienen angeordnet sein muß und sich zu diesen im Betrieb nicht verziehen darf. Dies ist praktisch bei der relativen Nachgiebigkeit des Fahrzeugbodens im Vergleich zu den Seitenschwellern kaum möglich. Außerdem wird durch eine Lagerung des Sitzes in drei Führungsschienen auch bei exakter Schienenausrichtung die Betätigungskraft zum Verschieben des Sitzes unzumutbar groß.

Aufgabe der Erfindung ist es, eine Abstützung der eingangs genannten Art zu schaffen, mit der ein Sitz oder eine Sitzbank auf zwei Führungsschienen in üblicher Weise leicht verschiebbar gelagert werden kann, die jedoch ein Verformen oder Ausreißen nach oben bei einem Frontalcrash oder eine Deformation nach unten bei einem Heckaufprall sicher vermeidet.

Diese Aufgabe wird erfindungsgemäß mit den kennzeichnenden Merkmalen des Anspruches 1 gelöst.

Vorteilhafte Weiterbildungen der Erfindung sind Gegenstand der Unteransprüche.

Durch die Lagerung des Sitzes auf zwei üblichen Sitzführungsschienen kann bei normaler Belastung der Sitz in üblicher Weise leicht verschoben werden. Die Sitzführungsschienen können in üblichen Toleranzen im Fahrzeug eingebaut werden. Die am Fahrzeugboden befestigte Stützschiene beeinträchtigt bei üblicher Benutzung die Bewegungsfähigkeit des Sitzes nicht, da dabei der mit dem Sitzgestell verbundene Sicherungsteil die Stützschiene nicht berührt. Erst wenn durch hohe außergewöhnliche Belastungen auf den Sitz Verformungen am Sitzgestell auftreten, wie das beispielsweise bei einem Crash der Fall ist, dann wird das Sicherungsteil an der Stützschiene eingreifen und eine unzulässige Verformung des Sitzgestells zuverlässig verhindern. Das Sitzgestell kann so für die im Fahrbetrieb üblichen Belastungen dimensioniert werden, ohne daß dabei die außergewöhnlich höheren Belastungen bei einem Crash zu berücksichtigen sind. Dadurch ist der Sitz gegenüber einem anderen ohne die erfindungsgemäße Stützschiene leichter ausführbar, ohne daß die Sicherheit reduziert ist.

Im allgemeinen wird eine mittig, zwischen den Sitzführungsschienen befindliche Stützschiene ausreichen, um einen Sitz vor unzulässigen Verformungen zu schützen. Es ist jedoch durchaus möglich und entspricht auch der Erfindung, wenn über die Breite einer Sitzbank verteilt mehrere Sitzschienen vorgesehen werden.

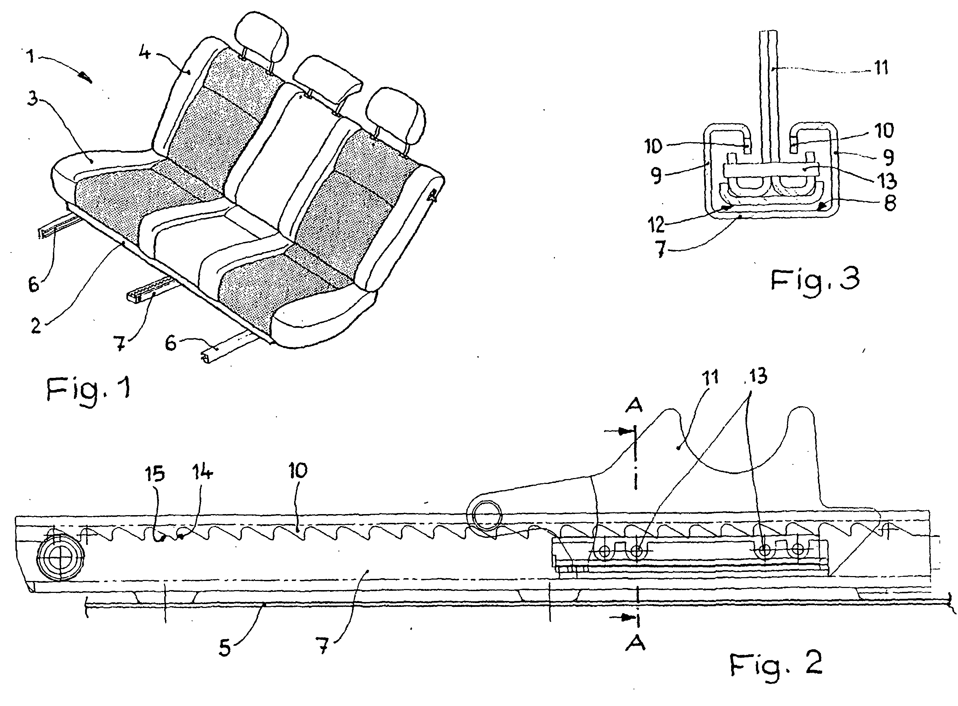

Ein Ausführungsbeispiel der Erfindung ist nachstehend anhand einer Zeichnung näher beschrieben. Es zeigen
- Fig. 1:: eine gemäß der Erfindung abgestützte Sitzbank;
- Fig. 2:: eine Seitenansicht der Stützschiene;
- Fig. 3:: einen Schnitt entlang der Linie A - A in Figur 2.

Ein Fahrzeugsitz 1 umfaßt ein Sitzgestell 2, eine Sitzfläche 3 und Lehnenteile 4. Am Sitzgestell 2 sind beidseits jeweils Sitzführungsteile befestigt, die in an sich bekannter Weise in mit dem Fahrzeugboden 5 fest verbundenen Sitzführungsschienen 6 verschiebbar gelagert sowie durch eine Betätigungseinrichtung arretierbar sind. Auf dem Fahrzeugboden 5 ist zwischen den beiden Sitzführungsschienen 6 und parallel zu diesen eine Stützschiene 7 festgelegt. Die Stützschiene 7 weist an einer ihrer zum Sitzgestell 2 hin gerichteten Seite eine Abstützbahn 8 auf. An zwei von der Abstützbahn 8 abgewinkelten Stegen 9 befindet sich jeweils eine Rastverzahnung 10, deren Zähne von dem Sitzgestell 2 weggerichtet sind. Zwischen den Stegen 9 und somit zwischen den Rastverzahnungen 10 befindet sich ein mit dem Sitzgestell 2 fest verbundenes Sicherungsteil 11, welches im Bereich der Abstützbahn 8 eine Abstützfläche 12 und im Bereich der Rastverzahnung 10 Rastmittel 13 hat. Zwischen der Abstützfläche 12 und der Abstützbahn 8 sowie zwischen den Rastmitteln 13 und der Rastverzahnung 10 ist ein Abstand, der so bemessen ist, daß sich bei Normalbelastung des Sitzes 1 die Stützschiene 7 und das Sicherungsteil 11 nicht berühren. Die Zähne der Rastverzahnung 10 haben jeweils eine zur Fahrzeugrückseite weisende Steilflanke 14 und eine zum Fahrzeugbug weisende Schrägflanke 15.

Unter normaler Belastung kann der Sitz 1 auf den Sitzführungsschienen 6 in Fahrzeuglängsrichtung entsprechend den Erfordernissen der Passagiere verschoben werden. Dabei bewegt sich das Sicherungsteil 11 entlang der Stützschiene 7, ohne diese zu berühren. Bei einem Frontalcrash des Fahrzeuges wird der Sitz 1 infolge der Verzögerung seiner Masse mit erheblich größerer Kraft als bei Normalbenutzung nach oben gedrückt, wobei auch eine Verformung des Sitzgestells 2 in Form einer Durchbiegung zwischen den beiden Sitzführungsschienen 6 nach oben eintritt. Dabei gelangen die fest mit dem Sicherungsteil 11 verbundenen Rastmittel 13 in Eingriff mit der Rastverzahnung 10 an der Stützschiene 7. Die fest mit dem Fahrzeugboden 5 verbundene Stützschiene 7 verhindert dabei sowohl ein weiteres Verformen des Sitzgestells 2 nach oben als auch ein ungewolltes Verschieben des Sitzes 1 innerhalb des Fahrzeuges nach vorn. Die Steilflanken 14 der Verzahnung halten die Rastmittel 13, die im Ausführungsbeispiel als Bolzen ausgeführt sind, an ihrem Ort fest. Durch die Anordnung von Steilflanken 14 und Schrägflanken 15 kann ein sicherer Eingriff sowie ein guter Halteeffekt der Rastmittel 13 erzielt werden.

Bei einem Heckaufprall, wie er sich z. B. durch einen Auffahrunfall ergibt, wird der Sitz 1 über das normale Belastungsmaß hinaus in Richtung Fahrzeugboden 5 gedrückt. Dadurch biegt sich das Sitzgestell 2 nach unten durch. Das mit ihm verbundene Sicherungsteil 11 gelangt dabei mit seiner Abstützfläche 12 auf die Abstützbahn 8 der Stützschiene 7 und verhindert so eine unzulässige Verformung des Sitzes 1.

Der besondere Vorteil der Erfindung ist darin zu sehen, daß das Sitzgestell 2 eines Sitzes in seiner Festigkeit lediglich auf die Normalbelastung ausgelegt werden muß und so gegenüber einer Auslegung auf Extrembelastungen bei einem Crash sehr viel leichter und damit auch bedienungsfreundlicher sein kann. Trotzdem widersteht dieser leichte Sitz den Extrembelastungen eines Crashs durch die dann zusätzlich eintretende Abstützung durch die Stützschiene 7 und das Sicherungsteil 11. Das Verschieben des Sitzes unter Normalbedingungen wird durch die Stützschiene 7 und das Sicherungsteil 11 nicht behindert. Besonders bei einer über die gesamte Fahrzeugbreite reichenden Sitzbank kann durch Anordnung einer oder auch mehrerer über die Breite verteilter Stützschienen 7 das Stabilitätsverhalten verbessert werden, ohne daß das Gewicht der Sitzbank vergrößert wird.

## Patentansprüche

1. Abstützung eines Fahrzeugsitzes (1), insbesondere einer in Fahrzeuglängsrichtung verstellbaren hinteren Sitzbank, mit einem eine Sitzfläche (3) und Lehnenteile (4) tragenden Sitzgestell (2), mit an beiden Seiten des Sitzgestells befindlichen Sitzführungsteilen, welche in mit einem Fahrzeugboden fest verbundenen Sitzführungsschienen (6) verschiebbar und verrastbar geführt sind und mit einer Betätigungseinrichtung für die Rastmittel zwischen den Sitzführungsteilen und den Sitzführungsschienen, **dadurch gekennzeichnet, daß** parallel zu den Sitzführungsschienen (6) unterhalb des Sitzgestells (2) am Fahrzeugboden (5) zumindest eine zusätzliche Stützschiene (7) angeordnet ist, der ein am Sitzgestell (2) befestigtes Sicherungsteil (11) zugeordnet ist, welches bei Normalbelastung des Sitzes (1) die Stützschiene (7) nicht berührt, wobei an der Stützschiene (7) eine Rastverzahnung (10) sowie eine Abstützbahn (8) und an dem Sicherungsteil (11) Rastmittel (13) sowie eine Abstützfläche (12) vorgesehen sind, wobei die bei einer über das Normalmaß hinausgehende Verformung des Sitzgestelles (2) nach, oben die Rastverzahnung (10) und die Rastmittel (13) miteinander in Eingriff gelangen, und dabei das Sitzgestell (2) gegen eine Längsverschiebung sowie eine weitere Verformung nach oben gehalten ist, und bei einer Verformung des Sitzgestells (2) über das Normalmaß nach unten die Abstützfläche (12) auf der Abstützbahn (8) aufsitzt und so das Sitzgestell (2) gegen eine weitere Verformung nach unten gehalten ist.

2. Abstützung nach Anspruch 1, **dadurch gekennzeichnet, daß** mittig zwischen den beiden Sitzführungsschienen (6) eine einzige Stützschiene (7) angeordnet ist.

3. Abstützung nach Anspruch 1, **dadurch gekennzeichnet, daß** zwischen den Sitzführungsschienen (6) über die Breite des Sitzes (1) verteilt mehrere Stützschienen (7) angeordnet sind.

4. Abstützung nach einem oder mehreren der Ansprüche 1 bis 3, **dadurch gekennzeichnet, daß** die Zähne der Rastverzahnung (10) zum Fahrzeugheck weisende Steilflanken (14) und zum Fahrzeugbug weisende Schrägflanken (15) aufweisen.

## Claims

1. Support for a vehicle seat (1), in particular a rear bench seat adjustable in the longitudinal direction of the vehicle, with a seat frame (2) carrying a seat surface (3) and backrest portions (4), with seat guide portions which are located on both sides of the seat frame and which are guided slidably and latchably in seat guide rails (6) rigidly connected to a vehicle floor, and with an actuating device for the latch means between the seat guide portions and the seat guide rails, **characterised in that** parallel to the seat guide rails (6) below the seat frame (2) on the vehicle floor (5) is arranged at least one additional support rail (7) with which is associated a locking portion (11) which is attached to the seat frame (2) and which does not touch the support rail (7) when the seat (1) is under normal load, wherein on the support rail (7) are provided a toothed latch portion (10) as well as a support strip (8) and on the locking portion (11) are provided latch means (13) as well as a support surface (12), wherein upon upward deformation of the seat frame (2) beyond the normal amount the toothed latch portion (10) and the latch means (13) engage with each other, and in the process the seat frame (2) is held against longitudinal displacement as well as further upward deformation, and upon downward deformation of the seat frame (2) beyond the normal amount the support surface (12) is seated on the support strip (8) and so the seat frame (2) is held against further downward deformation.

2. Support according to claim 1, **characterised in that** centrally between the two seat guide rails (6) is arranged a single support rail (7).

3. Support according to claim 1, **characterised in that** between the seat guide rails (6) distributed across the width of the seat (1) are arranged several support rails (7).

4. Support according to one or more of claims 1 to 3, **characterised in that** the teeth of the toothed latch portion (10) have steep flanks (14) facing towards the rear of the vehicle and sloping flanks (15) facing towards the front of the vehicle.

## Revendications

1. Support d'un siège (1) de véhicule, en particulier d'une banquette arrière réglable dans la direction longitudinale du véhicule, avec un cadre de siège (2) portant une surface de siège (3) et des éléments de dossier (4), avec disposés de chaque côté du cadre de siège des éléments de guidage de siège qui sont guidés de manière coulissante et avec possibilité d'encliquetage dans des glissières de siège (6) fixées fermement à un plancher de véhicule, et avec un dispositif d'actionnement pour les moyens d'encliquetage entre les éléments de guidage de siège et les glissières de siège, **caractérisé en ce qu'**il est prévu parallèlement aux glissières de siège (6), au-dessous du cadre de siège (2), sur le plancher de véhicule (5), au moins un rail de support (7) supplémentaire auquel est associé un élément de sécurité (11) fixé au cadre de siège (2), lequel élément de sécurité, pour une charge normale du siège (1) n'est pas en contact avec le rail de support (7), une crémaillère d'encliquetage (10) ainsi qu'une bande d'appui (8) étant prévues sur le rail de support (7) et des moyens d'encliquetage (13) ainsi qu'une surface d'appui (12) étant prévus sur l'élément de sécurité (11), dans le cas d'une déformation vers le haut, supérieure à la valeur normale, du cadre de siège (2), la crémaillère d'encliquetage (10) et les moyens d'encliquetage (13) venant en prise mutuelle, le cadre de siège (2) étant ainsi protégé contre tout déplacement longitudinal et toute déformation supplémentaire vers le haut, et dans le cas d'une déformation vers le bas, supérieure à la valeur normale, du cadre de siège (2), la surface d'appui (12) reposant sur la bande d'appui (8) protégeant ainsi le cadre de siège contre toute déformation supplémentaire vers le bas.

2. Support selon la revendication 1, **caractérisé en ce qu'**un rail de support (7) unique est disposé au milieu entre les deux glissières de siège (6).

3. Support selon la revendication 1, **caractérisé en ce que** plusieurs rails de support (7) sont disposés entre les glissières de siège (6), en étant répartis sur la largeur du siège (1).

4. Support selon une ou plusieurs des revendications 1 à 3, **caractérisé en ce que** les dents de la crémaillère d'encliquetage (10) présentent des flancs raides (14) tournés vers l'arrière du véhicule et des flancs inclinés (15) tournés vers l'avant du véhicule.
